# EUROPEAN PATENT SPECIFICATION

(11) **EP 3 412 103 B1**
(45) Date of publication and mention of the grant of the patent: **15.01.2025**
(21) Application number: 16889631.4
(22) Date of filing: 16.08.2016
(51) Int. Cl.: H04W 74/0833, H04W 74/00, H04W 88/08, H04W 72/11

(54) **SENSING-BASED COLLISION AVOIDANCE FOR V2V COMMUNICATION**
SENSORBASIERTE KOLLISIONSVERHINDERUNG FÜR V2V-KOMMUNIKATION
ÉVITEMENT DE COLLISION SUR LA BASE D'UNE DÉTECTION SERVANT À UNE COMMUNICATION V2V

(30) Priority: 04.02.2016 US 201662291425 P
(43) Date of publication of application: 12.12.2018
(73) Proprietor: Apple Inc., Cupertino, CA 95014 (US)
(72) Inventor: PANTELEEV, Sergey, Nizhny Novgorod 603065 (RU); KHORYAEV, Alexey Vladimirovich, Nizhny Novgorod 603105 (RU); SOSNIN, Sergey, Zavolzhie NIZ 606520 (RU); SHILOV, Mikhail, Nizhny Novgorod 603054 (RU)
(74) Representative: Froud, Christopher Andrew
(86) International application number: PCT/US2016/047213
(87) International publication number: WO 2017/135998

(56) References cited:
- WO-A1-2015/152581
- WO-A1-2016/013826
- WO-A1-2016/013901
- US-A1- 2011 107 169
- US-A1- 2015 271 786
- US-A1- 2015 312 935
- US-A1- 2016 014 812
- ZTE: "Enhancement of resource allocation and procedure for V2V", vol. RAN WG1, no. Anaheim, USA; 20151115 - 20151122, 7 November 2015 (2015-11-07), XP051022421, Retrieved from the Internet <URL:http://www.3gpp.org/ftp/tsg_ran/WG1_RL1/TSGR1_83/Docs/> [retrieved on 20151107]
- BEIJING XINWEI TELECOM TECHN: "Discussion on enhancement of V2X resource allocation", vol. RAN WG1, no. Anaheim, USA; 20151115 - 20151122, 15 November 2015 (2015-11-15), XP051039870, Retrieved from the Internet <URL:http://www.3gpp.org/ftp/Meetings_3GPP_SYNC/RAN1/Docs/> [retrieved on 20151115]

## Description

### PRIORITY CLAIM

This application claims priority under 35 U.S.C. § 119 to United States Provisional Patent Application Serial No. 62/291,425, filed February 4, 2016, and titled, "SENSING-BASED COLLISION AVOIDANCE FOR LTE VEHICLE-TO-VEHICLE COMMUNICATION,".

### TECHNICAL FIELD

Embodiments pertain to wireless communications. Some embodiments relate device-to-device (D2D) communication, vehicle-to-vehicle (V2V) communication, sidelink communication, and radio access network (RAN). Some embodiments relate to sensing-based collision avoidance for Long Term Evolution (LTE) V2V communication.

### BACKGROUND

Smart vehicles that can use radio access networks to communicate with other smart vehicles, as well as infrastructure or pedestrian devices are becoming more common. In addition, self-driving vehicles are being introduced. Communication or sensing-based collision avoidance for smart or self-driving vehicles may be desirable.

The following document is relevant: 3GPP DRAFT; R1-156659; contribution by ZTE which discusses enhancement of resource allocation and procedure for V2V.

### SUMMARY

The invention is defined by the independent claims. Further advantageous embodiments are defined in the dependent claims.

### BRIEF DESCRIPTION OF THE DRAWINGS

FIG. 1 is a functional diagram of a wireless network, in accordance with some embodiments.
FIG. 2 illustrates an example of packet transmission segments, reselection intervals, and sensing intervals at various user equipment, in accordance with some embodiments.
FIG. 3 illustrates an example semi-persistent scheduling period, in accordance with some embodiments.
FIG. 4 illustrates an example resource configuration for same subframe control and data transmission for vehicle-to-vehicle communication, in accordance with some embodiments.
FIG. 5 illustrates an example physical sidelink control channel frequency bitmap for same subframe control and data signaling, in accordance with some embodiments.
FIG. 6 is a flow chart illustrating an example method of sensingbased collision avoidance for Long Term Evolution vehicle-to-vehicle communication, in accordance with some embodiments.
FIG. 7 illustrates components of a communication device, in accordance with some embodiments.
FIG. 8 illustrates a block diagram of a communication device, in accordance with some embodiments.
FIG. 9 illustrates another block diagram of a communication device, in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

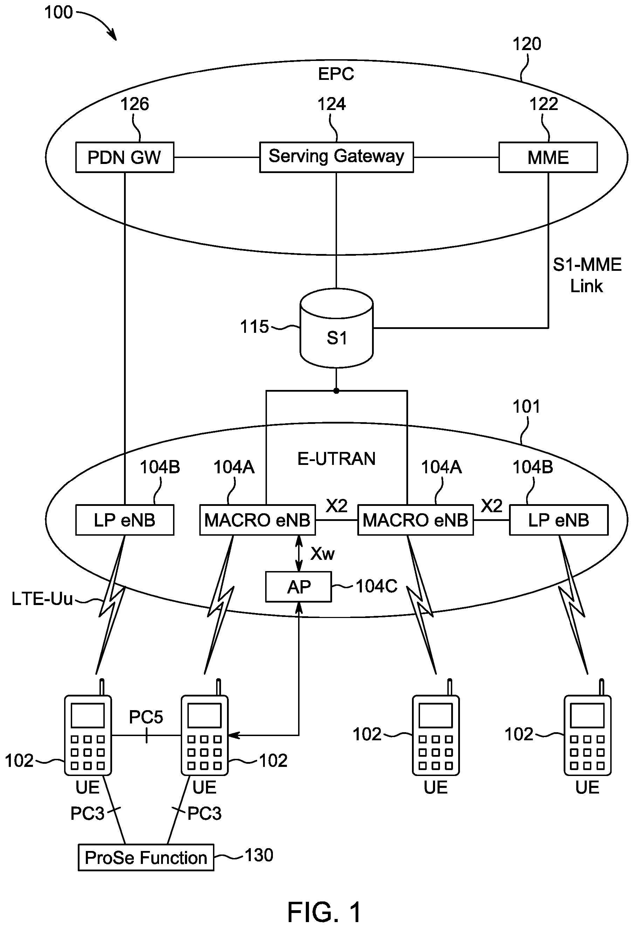

FIG. 1 shows an example of a portion of an end-to-end network architecture of a Long Term Evolution (LTE) network 100 with various components of the network in accordance with some embodiments. As used herein, an LTE network refers to both LTE and LTE Advanced (LTE-A) networks as well as other versions of LTE networks to be developed. The network 100 may comprise a radio access network (RAN) (e.g., as depicted, the E-UTRAN or evolved universal terrestrial radio access network) 101 and core network 120 (e.g., shown as an evolved packet core (EPC)) coupled together through an S1 interface 115. For convenience and brevity, only a portion of the core network 120, as well as the RAN 101, is shown in the example.

The core network 120 may include a mobility management entity (MME) 122, serving gateway (serving GW) 124, and packet data network gateway (PDN GW) 126. The RAN 101 may include evolved node Bs (eNBs) 104 (which may operate as base stations) for communicating with user equipment (UE) 102. The eNBs 104 may include macro eNBs 104a and low power (LP) eNBs 104b. In some cases, the connection between a UE 102 and an eNB 104 is a LTE-Uu connection. In some cases, one or more of the UEs 102 includes a proximity service (ProSe) application for device-to-device (D2D) or enhanced D2D (eD2D) communication via a PC5 connection. The UEs may have a PC3 connection to a ProSe Function 130.

As used herein, D2D communication may refer to sidelink (SL) communication, and a D2D channel may be a sidelink channel. D2D and sidelink each encompass their plain and ordinary meaning and may be used interchangeably. In some examples, one or more of the UEs 102 may be a vehicle computer, and the D2D or sidelink communication may include vehicle-to-vehicle (V2V) communication or vehicle-to-everything (V2X) communication, where X may represent another vehicle, a pedestrian device, or an infrastructure device.

The MME 122 may be similar in function to the control plane of legacy Serving GPRS Support Nodes (SGSN). The MME 122 may manage mobility aspects in access such as gateway selection and tracking area list management. The serving GW 124 may terminate the interface toward the RAN 101, and route data packets between the RAN 101 and the core network 120. In addition, the serving GW 124 may be a local mobility anchor point for inter-eNB handovers and also may provide an anchor for inter-3GPP mobility. Other responsibilities may include lawful intercept, charging, and some policy enforcement. The serving GW 124 and the MME 122 may be implemented in one physical node or separate physical nodes.

The PDN GW 126 may terminate a SGi interface toward the packet data network (PDN). The PDN GW 126 may route data packets between the EPC 120 and the external PDN, and may perform policy enforcement and charging data collection. The PDN GW 126 may also provide an anchor point for mobility devices with non-LTE access. The external PDN can be any kind of IP network, as well as an IP Multimedia Subsystem (IMS) domain. The PDN GW 126 and the serving GW 124 may be implemented in a single physical node or separate physical nodes.

The eNBs 104 (macro and micro) may terminate the air interface protocol and may be the first point of contact for a UE 102. In some embodiments, an eNB 104 may fulfill various logical functions for the RAN 101 including, but not limited to, RNC (radio network controller functions) such as radio bearer management, uplink and downlink dynamic radio resource management and data packet scheduling, and mobility management. In accordance with embodiments, UEs 102 may be configured to communicate orthogonal frequency division multiplexed (OFDM) communication signals with an eNB 104 over a multicarrier communication channel in accordance with an OFDMA communication technique. The OFDM signals may comprise a plurality of orthogonal subcarriers.

The S1 interface 115 may be the interface that separates the RAN 101 and the EPC 120. It may be split into two parts: the S1-U, which may carry traffic data between the eNBs 104 and the serving GW 124, and the S1-MME, which may be a signaling interface between the eNBs 104 and the MME 122. The X2 interface may be the interface between eNBs 104. The X2 interface may comprise two parts, the X2-C and X2-U. The X2-C may be the control plane interface between the eNBs 104, while the X2-U may be the user plane interface between the eNBs 104.

With cellular networks, LP cells 104b may be typically used to extend coverage to indoor areas where outdoor signals do not reach well, or to add network capacity in areas with dense usage. In particular, it may be desirable to enhance the coverage of a wireless communication system using cells of different sizes, macrocells, microcells, picocells, and femtocells, to boost system performance. The cells of different sizes may operate on the same frequency band, or may operate on different frequency bands with each cell operating in a different frequency band or only cells of different sizes operating on different frequency bands. As used herein, the term LP eNB refers to any suitable relatively LP eNB for implementing a smaller cell (smaller than a macro cell) such as a femtocell, a picocell, or a microcell. Femtocell eNBs may be typically provided by a mobile network operator to its residential or enterprise customers. A femtocell may be typically the size of a residential gateway or smaller and generally connect to a broadband line. The femtocell may connect to the mobile operator's mobile network and provide extra coverage in a range of typically 30 to 50 meters. Thus, a LP eNB 104b might be a femtocell eNB since it is coupled through the PDN GW 126. Similarly, a picocell may be a wireless communication system typically covering a small area, such as in-building (offices, shopping malls, train stations, etc.), or more recently in-aircraft. A picocell eNB may generally connect through the X2 link to another eNB such as a macro eNB through its base station controller (BSC) functionality. Thus, LP eNB may be implemented with a picocell eNB since it may be coupled to a macro eNB 104a via an X2 interface. Picocell eNBs or other LP eNBs LP eNB 104b may incorporate some or all functionality of a macro eNB LP eNB 104a. In some cases, this may be referred to as an access point base station or enterprise femtocell.

In some embodiments, the UE 102 may communicate with an access point (AP) 104c. The AP 104c may use only the unlicensed spectrum (e.g., WiFi bands) to communicate with the UE 102. The AP 104c may communicate with the macro eNB 104A (or LP eNB 104B) through an Xw interface. In some embodiments, the AP 104c may communicate with the UE 102 independent of communication between the UE 102 and the macro eNB 104A. In other embodiments, the AP 104c may be controlled by the macro eNB 104A and use LWA, as described in more detail below.

Communication over an LTE network may be split up into 10ms frames, each of which may contain ten 1ms subframes. Each subframe of the frame, in turn, may contain two slots of 0.5ms. Each subframe may be used for uplink (UL) communications from the UE to the eNB or downlink (DL) communications from the eNB to the UE. In one embodiment, the eNB may allocate a greater number of DL communications than UL communications in a particular frame. The eNB may schedule transmissions over a variety of frequency bands (f₁ and f₂). The allocation of resources in subframes used in one frequency band and may differ from those in another frequency band. Each slot of the subframe may contain 6-7 OFDM symbols, depending on the system used. In one embodiment, the subframe may contain 12 subcarriers. A downlink resource grid may be used for downlink transmissions from an eNB to a UE, while an uplink resource grid may be used for uplink transmissions from a UE to an eNB or from a UE to another UE. The resource grid may be a time-frequency grid, which is the physical resource in the downlink in each slot. The smallest time-frequency unit in a resource grid may be denoted as a resource element (RE). Each column and each row of the resource grid may correspond to one OFDM symbol and one OFDM subcarrier, respectively. The resource grid may contain resource blocks (RBs) that describe the mapping of physical channels to resource elements and physical RBs (PRBs). A PRB may be the smallest unit of resources that can be allocated to a UE. A resource block may be 180 kHz wide in frequency and 1 slot long in time. In frequency, resource blocks may be either 12 x 15 kHz subcarriers or 24 x 7.5 kHz subcarriers wide. For most channels and signals, 12 subcarriers may be used per resource block, dependent on the system bandwidth. In Frequency Division Duplexed (FDD) mode, both the uplink and downlink frames may be 10ms and frequency (full-duplex) or time (half-duplex) separated. In Time Division Duplexed (TDD), the uplink and downlink subframes may be transmitted on the same frequency and are multiplexed in the time domain. The duration of the resource grid 400 in the time domain corresponds to one subframe or two resource blocks. Each resource grid may comprise 12 (subcarriers) *14 (symbols) =168 resource elements.

Each OFDM symbol may contain a cyclic prefix (CP) which may be used to effectively eliminate Inter Symbol Interference (ISI), and a Fast Fourier Transform (FFT) period. The duration of the CP may be determined by the highest anticipated degree of delay spread. Although distortion from the preceding OFDM symbol may exist within the CP, with a CP of sufficient duration, preceding OFDM symbols do not enter the FFT period. Once the FFT period signal is received and digitized, the receiver may ignore the signal in the CP.

There may be several different physical downlink channels that are conveyed using such resource blocks, including the physical downlink control channel (PDCCH) and the physical downlink shared channel (PDSCH). Each subframe may be partitioned into the PDCCH and the PDSCH. The PDCCH may normally occupy the first two symbols of each subframe and carries, among other things, information about the transport format and resource allocations related to the PDSCH channel, as well as H-ARQ information related to the uplink shared channel. The PDSCH may carry user data and higher layer signaling to a UE and occupy the remainder of the subframe. Typically, downlink scheduling (assigning control and shared channel resource blocks to UEs within a cell) may be performed at the eNB based on channel quality information provided from the UEs to the eNB, and then the downlink resource assignment information may be sent to each UE on the PDCCH used for (assigned to) the UE. The PDCCH may contain downlink control information (DCI) in one of a number of formats that indicate to the UE how to find and decode data, transmitted on PDSCH in the same subframe, from the resource grid. The DCI format may provide details such as number of resource blocks, resource allocation type, modulation scheme, transport block, redundancy version, coding rate etc. Each DCI format may have a cyclic redundancy code (CRC) and be scrambled with a Radio Network Temporary Identifier (RNTI) that identifies the target UE for which the PDSCH is intended. Use of the UE-specific RNTI may limit decoding of the DCI format (and hence the corresponding PDSCH) to only the intended UE.

The subject technology proposes resource allocation methods for LTE based V2V communication aiming to reduce the over-air congestion and collision problems in order to control the quality and meet performance requirements of ITS (intelligent transportation system) applications and improve reliability of packet delivery. In some implementations, the resource allocation is based on sensing collision avoidance techniques.

The ITS applications such as active road safety and/or traffic management require periodic and/or event-triggered transmission of the messages carrying information about vehicle and surrounding environment such as vehicle location, vehicle speed, acceleration and different types of other control messages required for operation of vehicular applications. The typical traffic pattern generated by road safety applications may be approximately represented by periodical messages of up to *N_{V2X}* bytes size where *N_{V2X}* may vary in the range from 50 bytes to 1200 bytes depending on upper layers protocols and applications but may be typically described by *N_{V2X} =* 190 bytes or *N_{V2X} =* 300 bytes size. These messages are supposed to be delivered to the neighborhood entities (subscribers of V2X services (V2X users) including but not limited to vehicles, pedestrians, roadside units and/or eNBs). One of the key requirements for proper operation of the vehicular applications is the reliable delivery of the messages within a predefined effective range R_{V2X} (e.g. delivery to X_{V2X} = 90% of V2X users within a range R_{V2X} = 300 m). Another important requirement is latency of the message delivery given that broadcast information may become outdated if it is not delivered within the predefined time. Typically, the latency requirement (*L_{V2X}*) for V2V or V2X road safety applications is 100 ms, but may vary depending on application environment and message content (i.e., the system may tolerate larger latencies, but still operate properly).

Given the periodical transmission nature of the V2X traffic, the V2V system performance may significantly depend on the amount of V2X users in the neighborhood (vehicles, pedestrians, roadside units, or other entities participating in V2X service). For instance, under assumption of limited amount of allocated spectrum resources in a dense environment, system performance may degrade substantially due to frequent collisions and congestions leading to a severe interference environment. Therefore, techniques to control congestion or interference in the environment are desirable.

The most limiting factors in the case of congested operation are the in-band emissions interference, half-duplex, and co-channel interference effects. The in-band emission problem appears when a receiver tries to process two or more frequency separated signals in the same time resource (e.g., LTE subframe), but due to channel attenuations, the received powers of these signals may have a large difference (dynamic range) that leads to unsatisfactory reception of the weaker signals due to de-sensitivity and in-band emission masking.

The half-duplex problem is caused by the assumption that UEs operate in the same frequency band and, thus, cannot transmit and receive in the same moment of time. That leads to missing a part of V2V/V2X traffic from the proximal UEs and degrades the overall system performance.

The co-channel interference may be caused by the transmission of several users on the same resource, making it problematic to receive one or more of the transmissions due to strong interference.

Another important aspect is the required latency. In current target applications for V2V traffic, the requirement on end-to-end latency for delivering V2V data is 100 ms. In some other application, like automotive driving, the required latency may be as small as 1 ms, which is equal to current duration of an LTE subframe.

All these problems may be addressed or reduced by a sensing-based collision avoidance scheme. The purpose of sensing-based collision avoidance is to estimate and predict the congestion level on resources, and to select the resources with minimized congestion. Some aspects of the subject technology propose approaches to enable the sensing based collision avoidance for V2V communication.

In some aspects, the subject technology is applicable to enable a sensing based collision avoidance scheme for LTE PC5 V2V communication. Aspects may include one or more of the following features. Aspects may include utilization of semi-persistent scheduling (SPS) of transport block transmissions for multiple SCI (sidelink control information) periods in order to keep the interference environment predictable. Aspects may include modification of resource pools and configuration to provide UE-specific offset for resource selection instance. Aspects may include enhancement of sidelink control signaling to carry the information required for SPS allocation over multiple SCI periods or resource pools. Aspects may include eNB and UE assistance signaling to control and tune the sensing based collision avoidance performance.

Some proposed enhancements are discussed based on the following example of the sensing-based collision avoidance scheme that may be enabled in the LTE specification. Physical Sidelink Control Channel (PSCCH) transmission allocates resources over SPS period (e.g. T_{SPS} = 500 ms). Each UE performs resource reselection process every SPS period by monitoring PSCCH transmission within the SPS period, and each UE carries out the following operations. PSCCH decoding is used to extract information about occupied Physical Sidelink Shared Channel (PSSCH) resources for the next re-selection (SPS) period. Note, that it is assumed that Sidelink Control Information (SCI) provides exact time-frequency resources used for Media Access Control (MAC) Protocol Data Unit (PDU) transmission over SPS period. PSCCH receive (RX) Power Measurement (if PSCCH is decoded) is used to construct RX Power Map (Congestion Map) for all PSSCH time-frequency resources for the next re-selection (SPS) period. The UE may also take into account an assumption on in-band emission noise floor injected to unoccupied resource blocks of a potential PSSCH transmission. PSCCH transmissions that are failed to be decoded are not taken into account for RX Power Map (Congestion Map) construction. It should be noted that instead of the considered PSCCH decoding, the PSSCH region may be used to construct the Congestion Map over PSSCH resources.

The SPS period is divided into the packet transmission segments (e.g. T_{PTS} = 100 ms). In case of TDM-CD (time division multiplexing of sidelink control and data), each packet transmission segment is divided into a control transmission interval (I_{C}) and a data transmission interval (I_{D}). In case of SSF-CD (transmission of control and data in the same subframe), these intervals may be equal or overlap.

The RX Power Map is constructed for data transmission interval of each packet transmission segment within SPS period (characterizing RX power of each PSSCH time-frequency resource). Assuming ideal PSCCH decoding within communication range and 500 ms SPS period, the following apply. For the first packet transmission segment, scheduling information for approximately 80% of transmitters within communication range is available to the UE performing resource reselection for collision avoidance at the next SPS cycle. For the second packet transmission segment, scheduling information for approximately 60% of transmitters within communication range is available. For the last packet transmission segment, there is no scheduling information and therefore randomization is applied. Given that amount of information about active transmissions is reduced over time, resources may be selected based on the information gathered for the first packet transmission segment within SPS period.

For resource selection within a data transmission interval, the following apply. Form multiple transmission hypotheses using all possible combinations of frequency resource (frequency hopping pattern), T-RPTs (time resource patterns for transmission) and time offsets multiple of number of N_{D-TTI}, where N_{D-TTI} is the number of consecutive transmission time intervals (TTIs) within T-RPT used for one MAC PDU transmission. For each hypothesis calculate metric based on received power in the congestion map. In case of one TTI transport block transmission, this is simply the received power. For more than one TTI per transport block, the inverse of the sum of the inverse received powers on each TTI can be used (e.g. 1/P = 1/P₁ + 1/P₂). In order to randomize the hidden node problem, the transmission resource is randomly selected from the M best hypotheses, where M is a predetermined positive integer. According to a resource reselection rule, the UE transmits at selected candidate resources over the next SPS period until the next resource reselection period.

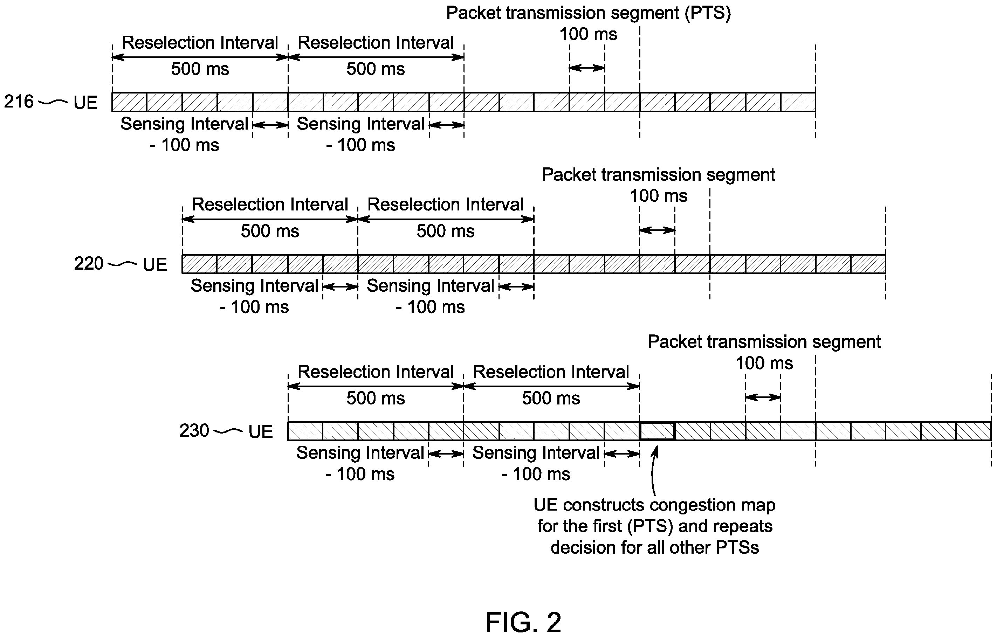

FIG. 2 illustrates an example of packet transmission segments, reselection intervals, and sensing intervals at various UEs - UEs 210, 220, and 230. Sensing-based collision avoidance may be implemented using the UEs 210, 220, and 230 of FIG. 2. As shown, each UE 210, 220, and 230 has reselection intervals (of 500 ms), and each reselection interval includes multiple sensing intervals (of 100 ms). Each UE 210, 220, and 230 also has a packet transmission segment of 100 ms. The reselection intervals, sensing intervals, and packet transmission segments of the UEs 210, 220, and 230 are not synchronized.

In some LTE systems, there is no support of sensing-based collision avoidance for D2D or V2V. Enabling sensing based collision avoidance may provide significant improvement of V2V communication performance to increase reliability of road safety applications.

Aspects related to SPS support are described below.

In some implementations, the sensing-based collision avoidance schemes are able to predict the interference environment expected on the upcoming transmission periods. This is achieved by allocating transmission resources in semi-persistent manner for a relatively long period, which is larger than the packet arrival period. In V2V, the current assumption on the minimum packet generation period is 100 ms. Thus, a SPS mechanism allowing transmission of several packets, for example, five over 500 ms with the same resource allocation parameters is targeted in some aspects. The following issues are involved in enabling SPS for sidelink.

Regarding mobility, the SPS operation assumes the sending of one SCI to schedule transmission for a long period. During that period, the environment may change due to movement of both transmitter and potential receivers. For example, the SCI may be decoded by one set of receivers in the target range, but the last packet in the SPS period may transmitted when the surrounding set of vehicles is changed. However, for the target SPS periodicity of 500 ms, a vehicle may change its coordinates by approximately 20 meters in the worst case (assuming a travel speed of around 140 km/h). This may be considered as a negligible offset comparing to the coverage of the control channel.

Furthermore, there are generally unknown traffic patterns for V2V services. The size of packets may change even if the periodicity is fixed. Moreover, event-triggered packets may be generated with unknown arrival time and size. In some cases, the SPS is able to handle this potential difference in packet sizes and arrival times.

In order to enable the SPS operation in the D2D framework, aspects of the subject technology provide one or more of the following enhancements.

Some aspects of the subject technology provide mechanisms to allocate resources for multiple SCI periods.

According to a first embodiment, the eNB configures SCI periods with UE-specific offsets to access the PSCCH and PSSCH resources. This may be enabled by several resource pools configured with shifted offsets in time. Rel. 13 of LTE provides up to eight different resource pools. The configuration of the eight resource pools with 40 ms offset may provide the target resource configuration. However, the 320 ms SCI period may be considered as too short for SPS behavior since it may accommodate only approximately three packet transmissions of typical V2V traffic model due to the 100 ms periodicity. Therefore, larger SCI periods may be introduced. In some examples, the following SCI periods (measured in ms) may be added: 500, 640, 1000, 1280, 2560, 5120, 10240 for frequency division duplex (FDD) and time division duplex (TDD) configurations #1-5; 560, 1120, 2240, 4480, 8960 subframes for the TDD configuration #0; and 240, 480, 960, 1920, 3840, 7680 subframes for the TDD configuration #6. In addition, the SCI periods of 10, 20, 25, 50 ms can be introduced to better fit the 100 ms latency requirement for V2V services without using SPS.

In this case, in order to transmit a V2V packet, the UE first selects a resource pool, which can provide transmission latency within the target requirement. For instance, the UE, selects the nearest pool for transmission, and then select resources for transmission inside the resource pool.

Additionally, the configuration of multiple resource pools to support SPS may require larger number of pools than are currently supported in the specification. For example, to support 500 ms SPS with 50 ms pool entrance granularity, at least ten pools are needed while eight pools are supported in Rel. 13 D2D. In order not to significantly increase the system information block (SIB) content, stacked resource pools signaling may be introduced.

In some cases, each resource pool is signaled separately. Alternatively, a stacked resource pools signaling technique may be used. In the latter case, the resource pool configuration is different by only a few parameters, such as an offset relative to a system frame number (SFN). Table 1 shows an example System Information Block information element, in accordance with some aspects. In Table 1, the proposed changes to enable stacked resource pools configuration are marked with ***.

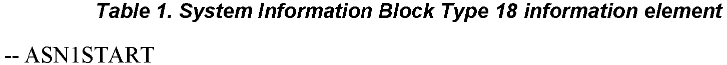

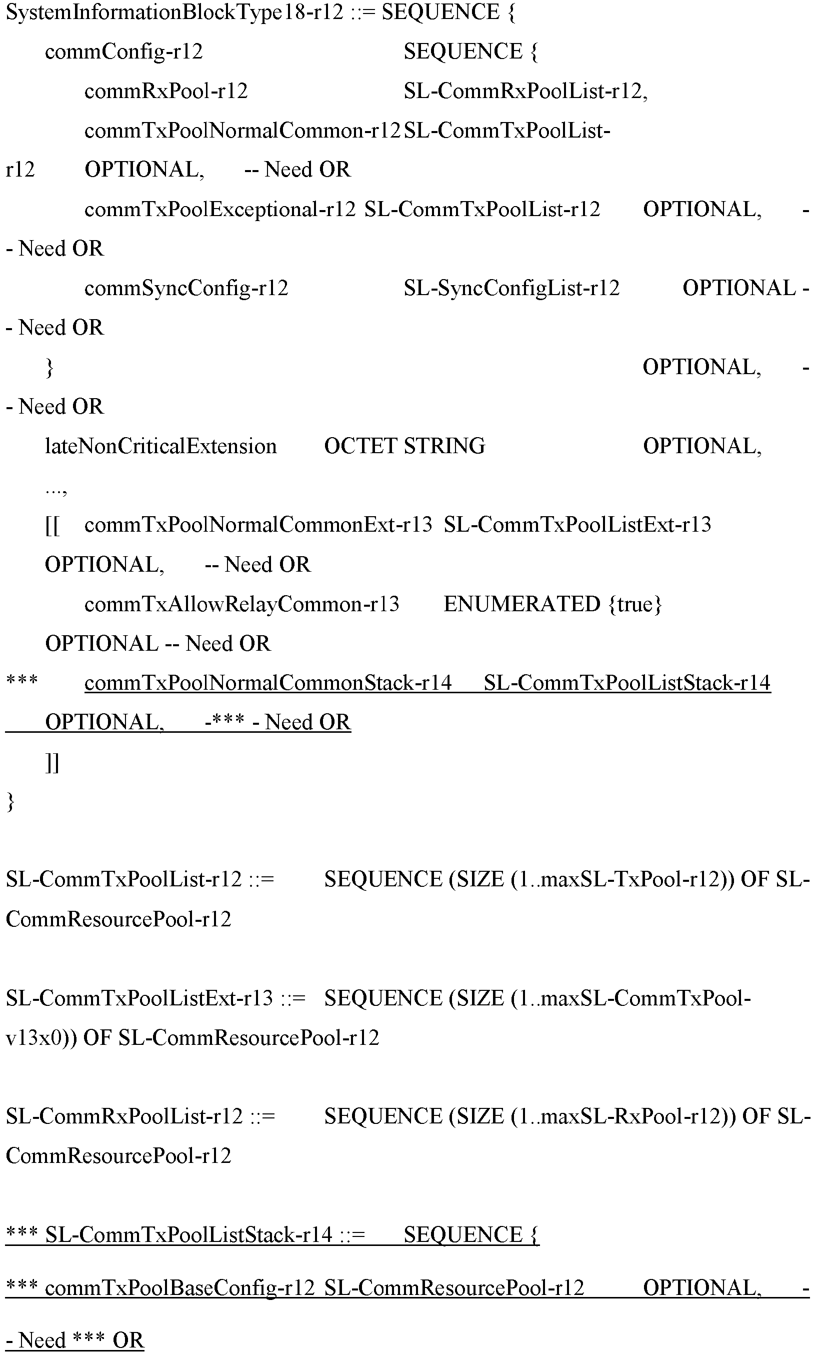

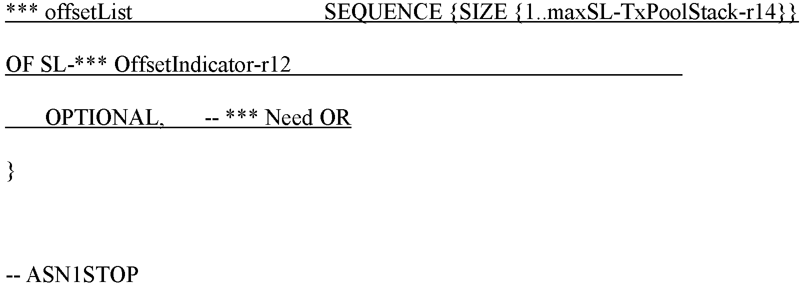

In an alternative implementation, an SPS mode is introduced. The SPS mode is configured system-wide without changes in resource pools. In some cases, SIB signaling is sufficient to configure SPS system-wide. When configured, each UE sends SCI once in multiple SCI periods. The notion of the SCI periods is not changed in this case.

In yet another implementation, an SPS SCI is introduced. The SPS SCI signals the resource that may be used for a long period. The explicit signaling of SPS needs to be carried by SCI. Additionally, a field may indicate that the transmission will happen once in X SCI periods counting from the first upcoming period (where X is a positive integer). Alternatively, the SCI may be transmitted every SCI period, but a field may indicate that the scheduling decision will not change for X SCI periods. In some cases, the field includes up to four bits to enable the target SPS configurations.

If SPS is configured, then the packets, arrived during the SPS period might have the same size in order to fit the already signaled Transport Block Size (TBS) and Modulation and Coding Scheme (MCS). In order to support the potentially different packet sizes, the following seven alternatives are proposed.

In the first alternative, the eNB re-sends SCI if the packet size differs from the already claimed transmission parameters. It may happen that the physical transmission parameters set for the whole SPS period does not fit to one or more of the packets to be transmitted (e.g., event-triggered packet). In this case, the SPS may be stopped (or paused) by sending a non-SPS SCI with other transmission parameters. In this case, collision avoidance may not work well. However, collisions may be rare in such situations.

The second alternative includes multiple processes, with SPS-independent processes for different packets. The SPS SCI carries a flag that indicates whether the SPS SCI overrides the previous SPS process. If the flag is set to "override," then the ongoing SPS process is stopped and the new SPS process with new transmission parameters begins. If the flag is set to "not override," then the new process starts and all the previous processes continue. In a more general case, the new SCI may be an SPS SCI or a non-SPS SCI.

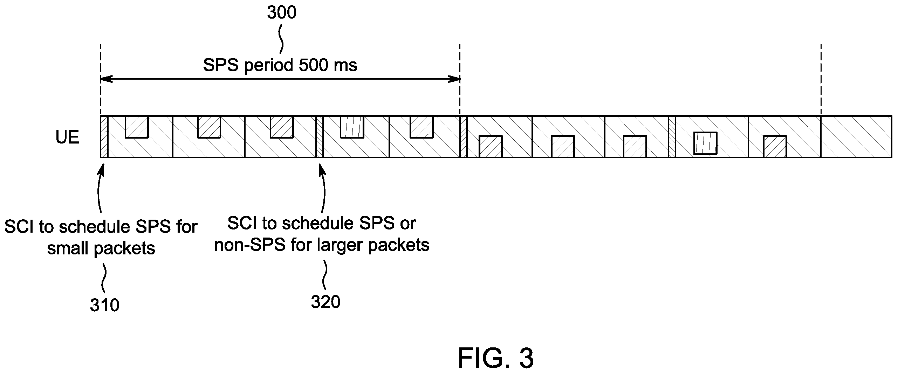

FIG. 3 illustrates an example SPS period 300 in accordance with the second alternative. As shown, the SPS period 300 includes a SCI 310 to schedule SPS for small packets, and a SCI 320 to schedule SPS for larger packets. The small packets and the larger packets are indicated differently in FIG. 3.

In the third alternative, SCI is split for resource allocation and for MCS signaling. The time-frequency resources may be signaled once for the whole SPS period, but MCS may be updated more frequently to accommodate instantaneous traffic needs. A new SCI format to indicate the MCS change is needed in this case.

In the fourth alternative, an additional MCS value (e.g., 5 bit or less if differential approach is used, i.e., the difference comparing to the first MCS is signaled) is added to SCI. In this case, the receiver should do hypothesis testing over the signaled MCSs. The order of MCS for testing should ensure that the receiver would likely decode the transport block using the first MCS. The SCI format is shown in Table 2, below.

**Table 2. SCI Format**

| | |
|---|---|
| MCS 0 | 5 bits |
| MCS 1 | 3-5 bits |
| Time Resource Pattern (T-RPT) | 7 bits |
| Timing Advance Indication | 11 bits |
| Group Destination ID | 8 bits |
| Resource Block Assignment and Hopping Flag | 5 to 13 bits |
| Frequency Hopping Flag | 1 bit |

In the fifth alternative, an additional PRB allocation field is added to SCI. The allocation may just signal the difference in size with the original PRB allocation that may significantly reduce the additional signaling overhead. If such signaling is provided, then the receiver should do hypothesis testing for all the provided frequency allocation sizes. The T-RPT and MCS, in this case, are reused for all (both) frequency allocation sizes. The SCI format is shown in Table 3, below.

**Table 3. SCI Format**

| | |
|---|---|
| MCS 0 | 5 bits |
| Time Resource Pattern (T-RPT) | 7 bits |
| Timing Advance Indication | 11 bits |
| Group Destination ID | 8 bits |
| Resource Block Assignment and Hopping Flag 0 | 5 to 13 bits |
| Resource Block Assignment and Hopping Flag 1 | 3-7 bits |
| Frequency Hopping Flag | 1 bit |

The sixth alternative is implementation specific. The V2V traffic is segmented in Radio Link Control (RLC) unacknowledged mode onto several RLC PDUs if the upper layer provided larger packet than the physical layer TBS. However, the UE should ensure there are TTIs left in the T-RPT to transmit several MAC PDUs due to the RLC segmentation.

The seventh alternative implements pattern signaling. The SPS pattern may be defined to indicate which subframes (e.g., SCI periods) use different L1 parameters. For example the bitmap SPS pattern '11011' may be used to indicate that SCI period 1, 2, 4, 5 use one L1 parameters associated with '1' and during the SCI period 3 the second set of L1 parameters should be used. The set of L1 parameters may include TBS, MCS, number of PRBs and I_{TRP} (time resource pattern of transmission).

Some of the above alternatives assume that SCI for SPS should be distinguishable from the non-SPS SCI. The following four solutions to distinguish the SCIs may be implemented.

In the first solution, SCI may be scrambled with another sequence if the same content is preserved comparing to SCI format 0. In the second solution, different resource pools or sub-pools are associated for SPS and non-SPS transmissions.

The third solution includes hypothesis testing by SCI size. Additional information needed to support SPS may lead to larger SCI payload size. Therefore, the receiver may try to assume different TBS when decoding the same PRB set in PSCCH region.

In the fourth solution, the SPS information is included into MAC PDU by multiplexing MAC SDU with control MAC CE that indicates how many SCI periods the allocation is valid. One drawback of the fourth solution is that collision avoidance based on PSCCH decoding may not know about SPS configurations of potentially colliding transmissions.

Sensing configuration is described below. The sensing based collision avoidance techniques disclosed herein may provide benefits when system loading is not very high. Therefore, in some scenarios sensing may not be efficient and may not be configured at all in order to simplify operation. Thus, a flexible mechanism to configure collision avoidance is desirable.

To extract gains from collision avoidance, all the UEs inside the resource pools may follow the same procedure. Thus, mixing Rel. 12 Mode-2 operation with random selection and sensing-based operation is not optimal. To separate the legacy UEs from the sensing-based collision avoidance enabled UEs, separate resources should be configured. The following two options to configure separate resources pool for sensing are proposed.

In a first option which is not according to the present invention, a new mode, Mode-2a, is introduced. In Mode-2a, the random rule is replaced with conditional resource selection. Corresponding resource pools are signaled separately for this mode.

In a second option which is according to the present invention, Mode-2 pools are reused with additional signaling in SIB, indicating that current resource pool assumes collision avoidance is enabled. Additional resource pools are configured to preserve backward compatibility and co-existence with Rel. 12-13 random transmissions.

In addition to semi-static resource configuration, the eNB may also control the parameters of the collision avoidance scheme in order to tune the system performance. The following parameters would be either signaled by eNB, pre-configured in the UE or provided by specification: SPS period, measurement interval, randomization degree, and sensing threshold. The SPS period length is configured as the SCI period length multiplied by a positive integer. The measurement interval indicates how many and which subframes (control or data transmission intervals) should be taken into account to reproduce the congestion map.

Randomization degree refers to the algorithm of sensing based collision avoidance, which may use some randomization parameter, which randomizes the collision probability to reduce the hidden node problem. This parameter may depend on vehicle density and system loading. For example, a UE may select transmission resources from M best candidates. The value of M may be configured by eNB through common or dedicated Radio Resource Control (RRC) signaling.

Sensing-based collision avoidance performance may depend on the sensing threshold. In other words, the sensing threshold may refer to the receiver sensitivity value to try to decode SCI and consider the corresponding signal source for construction of the congestion map.

Sensing-based collision avoidance may involve eNB and UE interaction. The eNB may assist in collision avoidance mechanisms by allocating resource pools and SPS configurations. The sensing based collision avoidance performance may significantly vary depending on user density, SPS configuration, number of retransmissions, and the like. These parameters may be controlled by the radio access network and may be adjusted to achieve better system performance. In order to be able to control the operation of sensing based collision avoidance, the eNB may need to ask UE(s) to provide some metrics. The following metrics may be provided by the UE(s): receive (RX) power measurements, number of unique sources of V2V traffic, and traffic pattern. The RX power measurements provide relative congestion levels of the configured radio resources for V2V communication.

The number of unique sources of V2V traffic provide, for the eNB, an idea about the packet reception ratio (PRR) of vehicles in its coverage. The eNB may count the number of vehicle in the coverage and use the provided statistics from vehicles to estimate the average PRR. Combining this metric with RX power measurements, the eNB may decide whether the V2V performance is limited by noise or by interference. Based on this information, the eNB may adjust parameter(s) of SPS, the number of retransmissions in open loop manner or the randomization degree for sensing-based collision avoidance.

The traffic pattern may not be known to the eNB in a case where distributed V2V operation is deployed. In this case, the periodicity of packets and their size may be reported to eNB, so that eNB may adjust the SPS and other parameters to aid in sensing-based collision avoidance.

In some aspects, SCI content may change. There are three main approaches to estimating possible collision(s) on time-frequency resources.

According to a first approach, the UE processes PSCCH resources and extracts the information about where the PSSCH transmission will happen. PSCCH is also used to estimate RX power on PSSCH resources from the same signal source. According to a second approach, the UE processes PSSCH resources to measure the RX power map (congestion map). As PSCCH information is not used, the power profile might not change during some time. A third approach includes a combination of the first approach and the second approach.

The PSCCH decoding-based collision avoidance assumes that information about exact transmission instances is available in SCI. This is used to accurately construct congestion map and to select resources based on actual transmissions. The LTE Rel. 12-13 procedure assumes that the signaled T-RPT may not be fully utilized for transmission, especially for V2V periodic traffic case, where a single transport block is sent once in 100 milliseconds. For example, if SCI period is 40 ms, 32 PSSCH subframes are allocated in the period and T-RPT with k=4 is selected, then the T-RPT bitmap will indicate that 16 subframes may be used for transmission by a UE. In order not to overestimate the power/ congestion by mapping the power to all 16 subframes, the target UE performing sensing based collision avoidance may have additional information how these 16 subframes are utilized to map 4 TTIs (or less) to them. For that purposes, the following additional signaling may be used: start index inside T-RPT, combinatorial index, and enhanced T-RPT.

The start index inside T-RPT may indicate from which subframe inside T-RPT bitmap with granularity of number of TTIs the MAC PDU is to be transmitted assuming consecutive mapping. The start index signaling may take up to 5 bits assuming 40 ms SCI period and one TTI transmission of MAC PDU.

The combinatorial index indicates which exact subframes from T-RPT are utilized. For example, in case of 16 subframes covered by T-RPT and 4 TTIs per transport block, the combinatorial index carries one of possible 1820 combinations of 4 TTIs selected from 16 subframes. For this example, 11 bits are needed to signal the TTIs position. In enhanced T-RPT, the T-RPT itself may be replaced by a more complex signaling of exact TTIs utilized for transmission.

Aspects provide support for same subframe control and data transmission. The same subframe control and data transmission (frequency domain multiplexing (FDM)) of PSCCH and PSSCH in the same subframe from the single UE perspective may also provide support for sensing based collisions avoidance. In this case, the collision avoidance on SCI is naturally provided by collision avoidance on PSSCH (data), contrary to the legacy TDM between PSCCH and PSSCH.

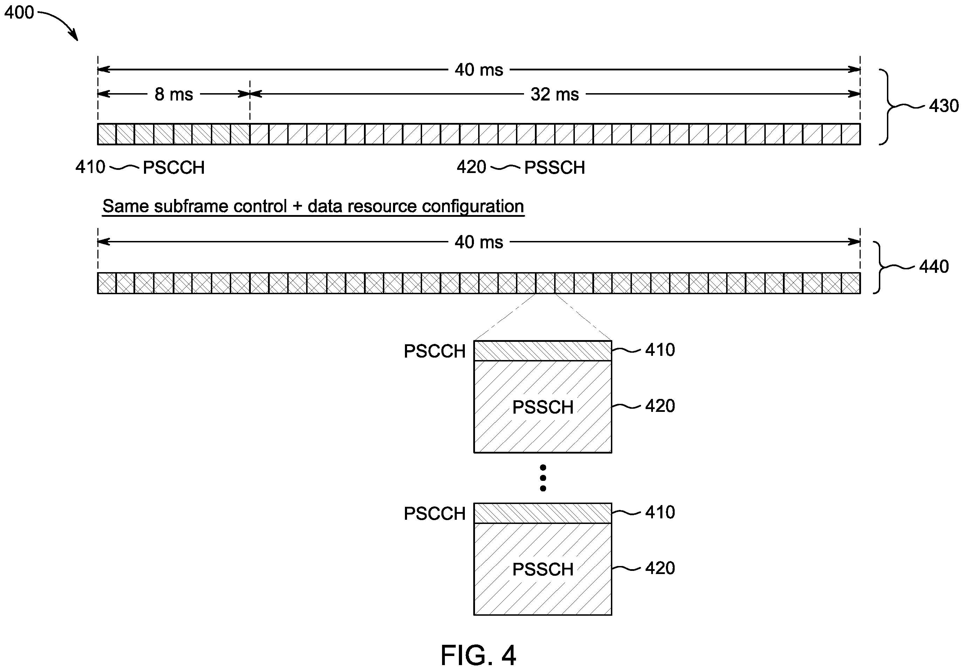

FIG. 4 illustrates an example resource configuration 400 for same subframe control and data transmission for vehicle-to-vehicle communication, in accordance with some embodiments. As shown, the resource configuration 400 is divided between PSCCH 410 and PSSCH 420, with subframes either being completely assigned to PSCCH 410 or PSSCH 420 in configuration 430 or being split between PSCCH 410 and PSSCH 420 in configuration 440.

In LTE Rel. 13, the PSCCH resources in frequency are allocated by 3 parameters: startPRB, endPRB and numPRB. Such signaling provides one or two continuous allocations in frequency. In order to support same subframe transmissions, the following two resources configuration signaling options are proposed.

According to a first option, a bitmap for frequency allocation of PSCCH is generated. The bitmap of 50 bits may be signaled to indicate which subframe is used for PSCCH transmission. A '1' in the bitmap may indicate the activated PRB for PSCCH transmission, and '0' may indicate the non-activated PRBs. In this case, the non-activated PRBs are used for PSSCH transmissions. PSCCH transmission on the Nth PRB is always associated with the PSSCH, which starts from N+1-th PRB. In order to reduce the receiver complexity and also save signaling overhead, the number of PSCCH resources (i.e., the number of ones in the bitmap) may be restricted by some predefined value (e.g., 10). The time domain structure signaling follows the approach used for PSSCH, in other words, the time domain structure signaling allows repetition of the subframe bitmap over SCI period.

According to a second option, signaling of the start offset (around 6 bits), period (around 6 bits), and the number of PSCCH resources (around 6 bits) is provided. This option provides a regular structure of PSCCH resources in a way that PSSCH allocations have equal size. The PSCCH transmission on the Nth PRB is always associated with the PSSCH that starts from N+1-th PRB.

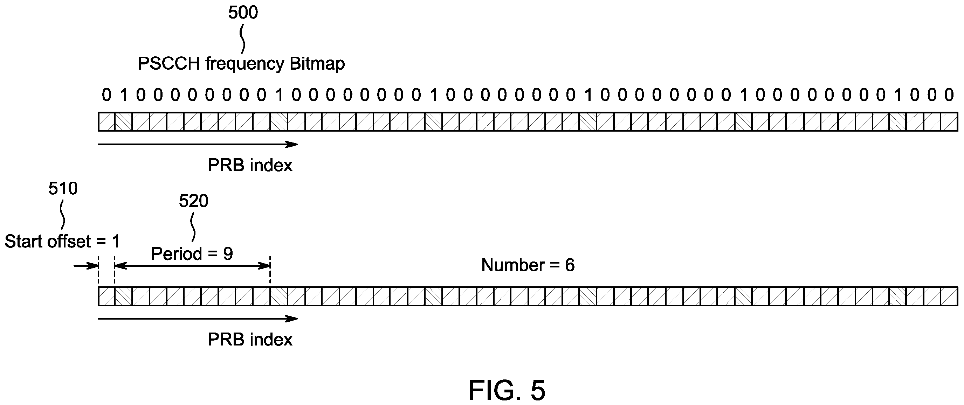

FIG. 5 illustrates an example PSCCH frequency bitmap 500 for same subframe control and data signaling, in accordance with some embodiments. As shown, the PSCCH frequency bitmap is characterized by a start offset 510 (e.g., 1 PRB) and a period 520 (e.g., 9 PRBs).

Aspects of the subject technology address SCI combining for same subframe control and data transmission. In some legacy resource configurations, the two retransmissions of SCI are linked by a hopping equation and, therefore, can be combined at a receiver. In the case of same subframe control and data, there is no explicit linkage assumed for the first transmission and for retransmissions. The information about data T-RPT and frequency allocation may be placed in SCI. However, the information about SCI retransmission cannot be derived from SCI. In order to be able to combine SCI transmissions, the linkage between a part of retransmissions may be introduced. For example, the first transmission and the first retransmission may be linked by a hopping equation while the remaining retransmissions may be transmitted according to a T-RPT and PRB allocation defined in SCI. This may allow extending of SCI coverage and not limiting much PSSCH performance by introducing hard linkage of all retransmissions.

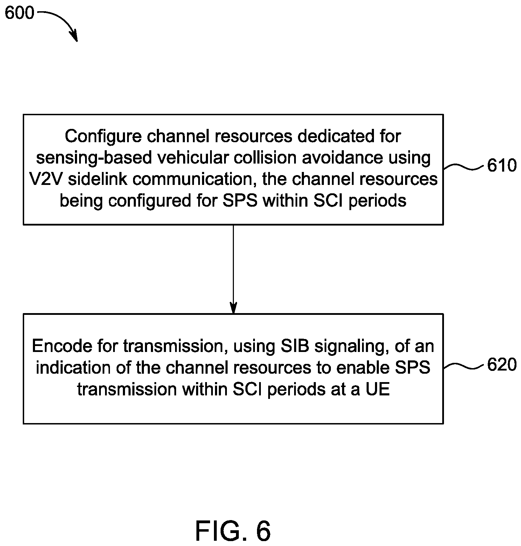

FIG. 6 is a flow chart illustrating an example method 600 of sensing-based collision avoidance for Long Term Evolution vehicle-to-vehicle communication, in accordance with some embodiments. At operation 610, an eNB configures channel resources dedicated for sensing-based vehicular collision avoidance using V2V sidelink communication, the channel resources being configured for SPS within SCI periods. At operation 620, the eNB encodes for transmission, using SIB signaling, of an indication of the channel resources to enable SPS transmission within SCI periods at a UE.

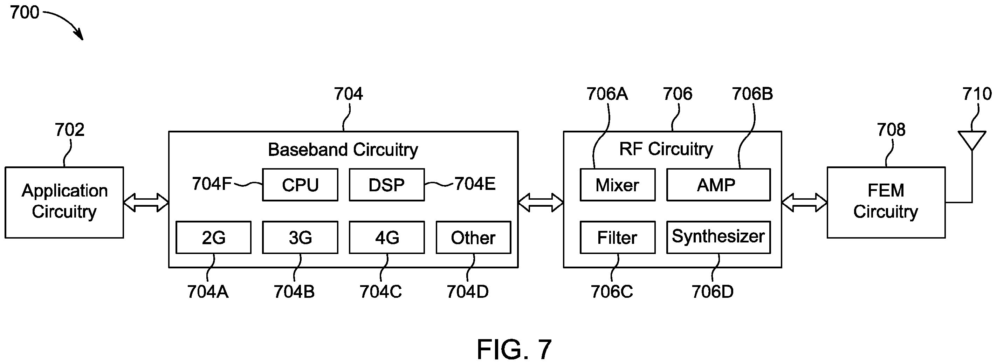

Embodiments described herein may be implemented into a system using any suitably configured hardware and/or software. FIG. 7 illustrates components of a UE in accordance with some embodiments. At least some of the components shown may be used in an eNB or MME, for example, such as the UE 102 or eNB 104 shown in FIG. 1. The UE 700 and other components may be configured to use the synchronization signals as described herein. The UE 700 may be a stationary, non-mobile device or may be a mobile device. In some embodiments, the UE 700 may include application circuitry 702, baseband circuitry 704, Radio Frequency (RF) circuitry 706, front-end module (FEM) circuitry 708 and one or more antennas 710, coupled together at least as shown. At least some of the baseband circuitry 704, RF circuitry 706, and FEM circuitry 708 may form a transceiver. In some embodiments, other network elements, such as the eNB may contain some or all of the components shown in FIG. 7. Other of the network elements, such as the MME, may contain an interface, such as the S1 interface, to communicate with the eNB over a wired connection regarding the UE.

The application or processing circuitry 702 may include one or more application processors. For example, the application circuitry 702 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 704 may include circuitry such as, but not limited to, one or more single-core or multi-core processors. The baseband circuitry 704 may include one or more baseband processors and/or control logic to process baseband signals received from a receive signal path of the RF circuitry 706 and to generate baseband signals for a transmit signal path of the RF circuitry 706. Baseband processing circuity 704 may interface with the application circuitry 702 for generation and processing of the baseband signals and for controlling operations of the RF circuitry 706. For example, in some embodiments, the baseband circuitry 704 may include a second generation (2G) baseband processor 704a, third generation (3G) baseband processor 704b, fourth generation (4G) baseband processor 704c, and/or other baseband processor(s) 704d for other existing generations, generations in development or to be developed in the future (e.g., fifth generation (5G), 6G, etc.). The baseband circuitry 704 (e.g., one or more of baseband processors 704a-d) may handle various radio control functions that enable communication with one or more radio networks via the RF circuitry 706. The radio control functions may include, but are not limited to, signal modulation/demodulation, encoding/decoding, radio frequency shifting, etc. In some embodiments, modulation/demodulation circuitry of the baseband circuitry 704 may include FFT, precoding, and/or constellation mapping/demapping functionality. In some embodiments, encoding/decoding circuitry of the baseband circuitry 704 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 704 may include elements of a protocol stack such as, for example, elements of an evolved universal terrestrial radio access network (E-UTRAN) protocol including, for example, physical (PHY), media access control (MAC), radio link control (RLC), packet data convergence protocol (PDCP), and/or radio resource control (RRC) elements. A central processing unit (CPU) 704e of the baseband circuitry 704 may be configured to run elements of the protocol stack for signaling of the PHY, MAC, RLC, PDCP and/or RRC layers. In some embodiments, the baseband circuitry may include one or more audio digital signal processor(s) (DSP) 704f. The audio DSP(s) 704f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 704 and the application circuitry 702 may be implemented together such as, for example, on a system on a chip (SOC).

In some embodiments, the baseband circuitry 704 may provide for communication compatible with one or more radio technologies. For example, in some embodiments, the baseband circuitry 704 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 704 is configured to support radio communications of more than one wireless protocol may be referred to as multi-mode baseband circuitry. In some embodiments, the device can be configured to operate in accordance with communication standards or other protocols or standards, including Institute of Electrical and Electronic Engineers (IEEE) 802.16 wireless technology (WiMax), IEEE 802.11 wireless technology (WiFi) including IEEE 802.11 ad, which operates in the 60 GHz millimeter wave spectrum, various other wireless technologies such as global system for mobile communications (GSM), enhanced data rates for GSM evolution (EDGE), GSM EDGE radio access network (GERAN), universal mobile telecommunications system (UMTS), UMTS terrestrial radio access network (UTRAN), or other 2G, 3G, 4G, 5G, etc. technologies either already developed or to be developed.

RF circuitry 706 may enable communication with wireless networks using modulated electromagnetic radiation through a non-solid medium. In various embodiments, the RF circuitry 706 may include switches, filters, amplifiers, etc. to facilitate the communication with the wireless network. RF circuitry 706 may include a receive signal path which may include circuitry to down-convert RF signals received from the FEM circuitry 708 and provide baseband signals to the baseband circuitry 704. RF circuitry 706 may also include a transmit signal path which may include circuitry to up-convert baseband signals provided by the baseband circuitry 704 and provide RF output signals to the FEM circuitry 708 for transmission.

In some embodiments, the RF circuitry 706 may include a receive signal path and a transmit signal path. The receive signal path of the RF circuitry 706 may include mixer circuitry 706a, amplifier circuitry 706b and filter circuitry 706c. The transmit signal path of the RF circuitry 706 may include filter circuitry 706c and mixer circuitry 706a. RF circuitry 706 may also include synthesizer circuitry 706d for synthesizing a frequency for use by the mixer circuitry 706a of the receive signal path and the transmit signal path. In some embodiments, the mixer circuitry 706a of the receive signal path may be configured to down-convert RF signals received from the FEM circuitry 708 based on the synthesized frequency provided by synthesizer circuitry 706d. The amplifier circuitry 706b may be configured to amplify the down-converted signals and the filter circuitry 706c may be a low-pass filter (LPF) or band-pass filter (BPF) configured to remove unwanted signals from the down-converted signals to generate output baseband signals. Output baseband signals may be provided to the baseband circuitry 704 for further processing. In some embodiments, the output baseband signals may be zero-frequency baseband signals, although this is not a requirement. In some embodiments, mixer circuitry 706a of the receive signal path may comprise passive mixers, although the scope of the embodiments is not limited in this respect.

In some embodiments, the mixer circuitry 706a of the transmit signal path may be configured to up-convert input baseband signals based on the synthesized frequency provided by the synthesizer circuitry 706d to generate RF output signals for the FEM circuitry 708. The baseband signals may be provided by the baseband circuitry 704 and may be filtered by filter circuitry 706c. The filter circuitry 706c may include a low-pass filter (LPF), although the scope of the embodiments is not limited in this respect.

In some embodiments, the mixer circuitry 706a of the receive signal path and the mixer circuitry 706a of the transmit signal path may include two or more mixers and may be arranged for quadrature downconversion and/or upconversion respectively. In some embodiments, the mixer circuitry 706a of the receive signal path and the mixer circuitry 706a of the transmit signal path may include two or more mixers and may be arranged for image rejection (e.g., Hartley image rejection). In some embodiments, the mixer circuitry 706a of the receive signal path and the mixer circuitry 706a may be arranged for direct downconversion and/or direct upconversion, respectively. In some embodiments, the mixer circuitry 706a of the receive signal path and the mixer circuitry 706a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 706 may include analog-to-digital converter (ADC) and digital-to-analog converter (DAC) circuitry and the baseband circuitry 704 may include a digital baseband interface to communicate with the RF circuitry 706.

In some dual-mode embodiments, a separate radio IC circuitry may be provided for processing signals for each spectrum, although the scope of the embodiments is not limited in this respect.

In some embodiments, the synthesizer circuitry 706d may be a fractional-N synthesizer or a fractional N/N+1 synthesizer, although the scope of the embodiments is not limited in this respect as other types of frequency synthesizers may be suitable. For example, synthesizer circuitry 706d may be a delta-sigma synthesizer, a frequency multiplier, or a synthesizer comprising a phase-locked loop with a frequency divider.

The synthesizer circuitry 706d may be configured to synthesize an output frequency for use by the mixer circuitry 706a of the RF circuitry 706 based on a frequency input and a divider control input. In some embodiments, the synthesizer circuitry 706d may be a fractional N/N+1 synthesizer.

In some embodiments, frequency input may be provided by a voltage controlled oscillator (VCO), although that is not a requirement. Divider control input may be provided by either the baseband circuitry 704 or the applications processor 702 depending on the desired output frequency. In some embodiments, a divider control input (e.g., N) may be determined from a look-up table based on a channel indicated by the applications processor 702.

Synthesizer circuitry 706d of the RF circuitry 706 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 706d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (f_{LO}). In some embodiments, the RF circuitry 706 may include an IQ/polar converter.

FEM circuitry 708 may include a receive signal path which may include circuitry configured to operate on RF signals received from one or more antennas 710, amplify the received signals and provide the amplified versions of the received signals to the RF circuitry 706 for further processing. FEM circuitry 708 may also include a transmit signal path which may include circuitry configured to amplify signals for transmission provided by the RF circuitry 706 for transmission by one or more of the one or more antennas 710.

In some embodiments, the FEM circuitry 708 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 706). The transmit signal path of the FEM circuitry 708 may include a power amplifier (PA) to amplify input RF signals (e.g., provided by RF circuitry 706), and one or more filters to generate RF signals for subsequent transmission (e.g., by one or more of the one or more antennas 710.

In some embodiments, the UE 700 may include additional elements such as, for example, memory/storage, display, camera, sensor, and/or input/output (I/O) interface as described in more detail below. In some embodiments, the UE 700 described herein may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or other device that may receive and/or transmit information wirelessly. In some embodiments, the UE 700 may include one or more user interfaces designed to enable user interaction with the system and/or peripheral component interfaces designed to enable peripheral component interaction with the system. For example, the UE 700 may include one or more of a keyboard, a keypad, a touchpad, a display, a sensor, a non-volatile memory port, a universal serial bus (USB) port, an audio jack, a power supply interface, one or more antennas, a graphics processor, an application processor, a speaker, a microphone, and other I/O components. The display may be an LCD or LED screen including a touch screen. The sensor may include a gyro sensor, an accelerometer, a proximity sensor, an ambient light sensor, and a positioning unit. The positioning unit may communicate with components of a positioning network, e.g., a global positioning system (GPS) satellite.

The antennas 710 may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 710 may be effectively separated to take advantage of spatial diversity and the different channel characteristics that may result.

Although the UE 700 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

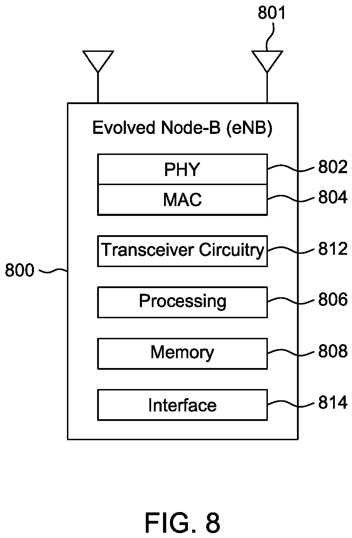

FIG. 8 is a block diagram of a communication device 800 in accordance with some embodiments. The communication device 800 may be a UE or eNB, for example, such as the UE 102 or eNB 104 shown in FIG. 1. The physical layer circuitry 802 may perform various encoding and decoding functions that may include formation of baseband signals for transmission and decoding of received signals. The communication device 800 may also include medium access control layer (MAC) circuitry 804 for controlling access to the wireless medium. The communication device 800 may also include processing circuitry 806, such as one or more single-core or multi-core processors, and memory 808 arranged to perform the operations described herein. The physical layer circuitry 802, MAC circuitry 804 and processing circuitry 806 may handle various radio control functions that enable communication with one or more radio networks compatible with one or more radio technologies. The radio control functions may include signal modulation, encoding, decoding, radio frequency shifting, etc. For example, similar to the device shown in FIG. 2, in some embodiments, communication may be enabled with one or more of a WMAN, a WLAN, and a WPAN. In some embodiments, the communication device 800 can be configured to operate in accordance with 3GPP standards or other protocols or standards, including WiMax, WiFi, WiGig, GSM, EDGE, GERAN, UMTS, UTRAN, or other 3G, 3G, 4G, 5G, etc. technologies either already developed or to be developed. The communication device 800 may include transceiver circuitry 812 to enable communication with other external devices wirelessly and interfaces 814 to enable wired communication with other external devices. As another example, the transceiver circuitry 812 may perform various transmission and reception functions such as conversion of signals between a baseband range and a Radio Frequency (RF) range.

The antennas 801 may comprise one or more directional or omnidirectional antennas, including, for example, dipole antennas, monopole antennas, patch antennas, loop antennas, microstrip antennas or other types of antennas suitable for transmission of RF signals. In some MIMO embodiments, the antennas 801 may be effectively separated to take advantage of spatial diversity and the different channel characteristics that may result.

Although the communication device 800 is illustrated as having several separate functional elements, one or more of the functional elements may be combined and may be implemented by combinations of software-configured elements, such as processing elements including DSPs, and/or other hardware elements. For example, some elements may comprise one or more microprocessors, DSPs, FPGAs, ASICs, RFICs and combinations of various hardware and logic circuitry for performing at least the functions described herein. In some embodiments, the functional elements may refer to one or more processes operating on one or more processing elements. Embodiments may be implemented in one or a combination of hardware, firmware and software. Embodiments may also be implemented as instructions stored on a computer-readable storage device, which may be read and executed by at least one processor to perform the operations described herein.

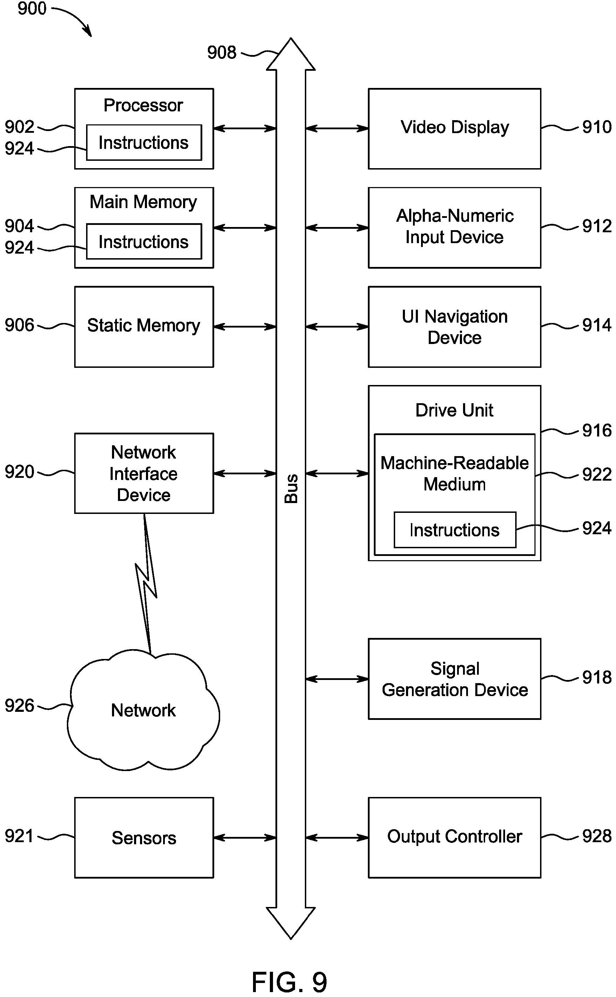

FIG. 9 illustrates another block diagram of a communication device 900 in accordance with some embodiments. The communication device 100 may correspond to the UE 102 or the eNB 104. In alternative embodiments, the communication device 900 may operate as a standalone device or may be connected (e.g., networked) to other communication devices. In a networked deployment, the communication device 900 may operate in the capacity of a server communication device, a client communication device, or both in server-client network environments. In an example, the communication device 900 may act as a peer communication device in peer-to-peer (P2P) (or other distributed) network environment. The communication device 900 may be a UE, eNB, PC, a tablet PC, a STB, a PDA, a mobile telephone, a smart phone, a web appliance, a network router, switch or bridge, or any communication device capable of executing instructions (sequential or otherwise) that specify actions to be taken by that communication device. Further, while only a single communication device is illustrated, the term "communication device" shall also be taken to include any collection of communication devices that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a communication device readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Communication device (e.g., computer system) 900 may include a hardware processor 902 (e.g., a central processing unit (CPU), a graphics processing unit (GPU), a hardware processor core, or any combination thereof), a main memory 904 and a static memory 906, some or all of which may communicate with each other via an interlink (e.g., bus) 908. The communication device 900 may further include a display unit 910, an alphanumeric input device 912 (e.g., a keyboard), and a user interface (UI) navigation device 914 (e.g., a mouse). In an example, the display unit 910, input device 912 and UI navigation device 914 may be a touch screen display. The communication device 900 may additionally include a storage device (e.g., drive unit) 916, a signal generation device 918 (e.g., a speaker), a network interface device 920, and one or more sensors 921, such as a global positioning system (GPS) sensor, compass, accelerometer, or other sensor. The communication device 900 may include an output controller 928, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 916 may include a communication device readable medium 922 on which is stored one or more sets of data structures or instructions 924 (e.g., software) embodying or utilized by any one or more of the techniques or functions described herein. The instructions 924 may also reside, completely or at least partially, within the main memory 904, within static memory 906, or within the hardware processor 902 during execution thereof by the communication device 900. In an example, one or any combination of the hardware processor 902, the main memory 904, the static memory 906, or the storage device 916 may constitute communication device readable media.

While the communication device readable medium 922 is illustrated as a single medium, the term "communication device readable medium" may include a single medium or multiple media (e.g., a centralized or distributed database, and/or associated caches and servers) configured to store the one or more instructions 924.

The term "communication device readable medium" may include any medium that is capable of storing, encoding, or carrying instructions for execution by the communication device 900 and that cause the communication device 900 to perform any one or more of the techniques of the present disclosure, or that is capable of storing, encoding or carrying data structures used by or associated with such instructions. Non-limiting communication device readable medium examples may include solid-state memories, and optical and magnetic media. Specific examples of communication device readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device readable media may include non-transitory communication device readable media. In some examples, communication device readable media may include communication device readable media that is not a transitory propagating signal.

The instructions 924 may further be transmitted or received over a communications network 926 using a transmission medium via the network interface device 920 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 920 may include one or more physical jacks (e.g., Ethernet, coaxial, or phonejacks) or one or more antennas to connect to the communications network 926. In an example, the network interface device 920 may include a plurality of antennas to wirelessly communicate using at least one of single-input multiple-output (SIMO), MIMO, or multiple-input single-output (MISO) techniques. In some examples, the network interface device 920 may wirelessly communicate using Multiple User MIMO techniques. The term "transmission medium" shall be taken to include any intangible medium that is capable of storing, encoding or carrying instructions for execution by the communication device 900, and includes digital or analog communications signals or other intangible medium to facilitate communication of such software.

Although an embodiment has been described with reference to specific example embodiments, it will be evident that various modifications and changes may be made to these embodiments. Accordingly, the specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims.

Although specific embodiments have been illustrated and described herein, it should be appreciated that any arrangement calculated to achieve the same purpose may be substituted for the specific embodiments shown. Combinations of the above embodiments, and other embodiments not specifically described herein, will be apparent to those of skill in the art upon reviewing the above description.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, UE, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The following claims are hereby incorporated into the detailed description, with each claim standing on its own as a separate embodiment.

## Claims

1. An apparatus of an evolved NodeB, eNB (104), the apparatus comprising: processing circuitry (806) and memory (808); the processing circuitry (806) is configured to:
configure Mode-2 channel resources for sensing-based collision avoidance enabled user equipments, UEs, wherein the Mode-2 channel resources are dedicated for sensing-based collision avoidance and configure additional channel resources to preserve backward compatibility and co-existence with random transmissions, the configured Mode-2 channel resources and additional channel resources are for vehicle-to-vehicle, V2V, sidelink communication, the Mode-2 channel resources being configured for semi-persistent scheduling, SPS, within sidelink control information, SCI, periods; and
encode for transmission, using system information block, SIB, signaling, of an indication of the Mode-2 channel resources and the additional channel resources to enable SPS transmission within SCI periods at a user equipment, UE (102).

2. The apparatus of claim 1, wherein the processing circuitry comprises a baseband processor.

3. The apparatus of any of claims 1-2, wherein the processing circuitry is further configured to configure a SPS period using multiple resource pools with shifted physical sidelink control channel, PSCCH, resources.

4. The apparatus of any of claims 1-2, wherein the processing circuitry is configured to enable SPS by encoding a SPS transmission which carries a field indicating in how many SCI periods new indicia of a SPS period will be provided.

5. The apparatus of any of claims 1-2, wherein the processing circuitry is configured to encode for transmission of packets of different sizes inside a SPS period, supported by signaling of additional modulation and coding schemes, MCS, signaling of additional physical resource block, PRB, allocation, transmitting additional SCI with new parameters, or running multiple SPS processes for different packet sizes.

6. The apparatus of any of claims 1-2, wherein the processing circuitry is further configured to configure sensing based collision avoidance parameters by common or dedicated signaling, including one or more of: SPS period, number of retransmissions, randomization degree, and sensing threshold.

7. The apparatus of any of claims 1-2, wherein the processing circuitry is configured to decode metrics, reported by the UE, to aid sensing-based collision avoidance, the decoded metrics including one or more of: a received power map, a number of unique signal sources in proximity, and a traffic pattern.

8. The apparatus of any of claims 1-2, wherein the processing circuitry is further configured to configure same subframe control and data transmission resources by a bitmap that indicates activated physical resource blocks, PRBs, in a bandwidth or by start offset, period, and number signaling.

9. The apparatus of any of claims 1-2, further comprising transceiver circuitry configured to: transmit the indicia of the SPS SCI to enable SPS transmission at the UE; and transmit the multiple process SPS for the packets of different sizes.

10. The apparatus of claim 9, further comprising an antenna coupled to the transceiver circuitry.

11. A machine-readable medium storing instructions for execution by processing circuitry (806) of an evolved NodeB, eNB (104), to cause the eNB (104) to configure vehicle-to-vehicle, V2V, communication, the instructions causing the processing circuitry (806) to:
configure Mode-2 channel resources for sensing-based collision avoidance enabled user equipments, UEs, wherein the Mode-2 channel resources are dedicated for sensing-based collision avoidance and configure additional channel resources to preserve backward compatibility and co-existence with random transmissions, the configured Mode-2 channel resources and the additional channel resources are for V2V sidelink communication, the Mode-2 channel resources being configured for semi-persistent scheduling, SPS, within sidelink control information, SCI, periods; and
encode for transmission, using system information block, SIB, signaling, of an indication of the Mode-2 channel resources and the additional channel resources to enable SPS transmission within SCI periods at a user equipment, UE (102).

12. The machine-readable medium of claim 11, the instructions causing the processing circuitry to configure the sensing-based collision avoidance parameters by a Mode- 2a, and wherein a random resource selection rule is replaced by sensing-based resource selection.

13. The machine-readable medium of claim 11, the instructions causing the processing circuitry to configure the indicia of a SPS period using multiple resource pools with shifted physical sidelink control channel, PSCCH, resources.

14. The machine-readable medium of claim 11, the instructions causing the processing circuitry to enable SPS by encoding a SPS SCI transmission which carries a field indicating in how many SCI periods new indicia of a SPS period will be provided.

## Patentansprüche

1. Vorrichtung eines evolved NodeB, eNB (104), die Vorrichtung umfassend:
eine Verarbeitungsschaltung (806) und einen Speicher (808); wobei die Verarbeitungsschaltung (806) konfiguriert ist, um: Modus-2-Kanalressourcen für erfassungsbasierte kollisionsvermeidungsfähige Benutzergeräte, UEs, zu konfigurieren, wobei die Modus-2-Kanalressourcen für die erfassungsbasierte Kollisionsvermeidung dediziert sind, und zusätzliche Kanalressourcen zu konfigurieren, um Rückwärtskompatibilität und Koexistenz mit zufälligen Übertragungen zu bewahren, wobei die konfigurierten Modus-2-Kanalressourcen und zusätzlichen Kanalressourcen für Fahrzeug-zu-Fahrzeug-, V2V-, Sidelink-Kommunikation sind, wobei die Modus-2-Kanalressourcen für semi-persistente Planung, SPS, innerhalb von Sidelink-Steuerinformations-, SCI-, Perioden konfiguriert sind; und
zur Übertragung unter Verwendung von Systeminformationsblock, SIB, Signalisierung einer Anzeige der Modus-2-Kanalressourcen und der zusätzlichen Kanalressourcen zu codieren, um SPS-Übertragung innerhalb von SCI-Perioden an einem Benutzergerät, UE (102), zu ermöglichen.

2. Vorrichtung nach Anspruch 1, wobei die Verarbeitungsschaltung einen Basisbandprozessor umfasst.

3. Vorrichtung nach einem der Ansprüche 1-2, wobei die Verarbeitungsschaltung ferner konfiguriert ist, um eine SPS-Periode unter Verwendung mehrerer Ressourcenpools mit verschobenen physischen Sidelink-Steuerkanal-, PSCCH-, Ressourcen zu konfigurieren.

4. Vorrichtung nach einem der Ansprüche 1-2, wobei die Verarbeitungsschaltung konfiguriert ist, um SPS durch Codieren einer SPS-Übertragung zu ermöglichen, die ein Feld trägt, das anzeigt, in wie vielen SCI-Perioden neue Anzeigen einer SPS-Periode bereitgestellt werden.

5. Vorrichtung nach einem der Ansprüche 1-2, wobei die Verarbeitungsschaltung konfiguriert ist, um zur Übertragung von Paketen unterschiedlicher Größe innerhalb einer SPS-Periode unterstützt durch Signalisierung zusätzlicher Modulations- und Codierungsschemata, MCS, Signalisierung zusätzlicher physischer Ressourcenblock-, PRB-, Zuweisung, Übertragen zusätzlicher SCI mit neuen Parametern oder Ausführen mehrerer SPS-Prozesse für unterschiedliche Paketgrößen, zu codieren.

6. Vorrichtung nach einem der Ansprüche 1-2, wobei die Verarbeitungsschaltung ferner konfiguriert ist, um erfassungsbasierte Kollisionsvermeidungsparameter durch gemeinsame oder dedizierte Signalisierung zu konfigurieren, einschließlich eines oder mehrerer von: SPS-Periode, Anzahl von Neuübertragungen, Randomisierungsgrad und Erfassungsschwelle.

7. Vorrichtung nach einem der Ansprüche 1-2, wobei die Verarbeitungsschaltung konfiguriert ist, um Metriken, die von dem UE gemeldet werden, zu decodieren, um die erfassungsbasierte Kollisionsvermeidung zu unterstützen, wobei die decodierten Metriken eines oder mehrere von Folgendem einschließen: eine empfangene Leistungskarte, eine Anzahl von eindeutigen Signalquellen in der Nähe und ein Verkehrsmuster.

8. Vorrichtung nach einem der Ansprüche 1-2, wobei die Verarbeitungsschaltung ferner konfiguriert ist, um dieselben Subframe-Steuer- und Datenübertragungsressourcen durch eine Bitmap zu konfigurieren, die aktivierte physische Ressourcenblöcke, PRBs, in einer Bandbreite oder durch Startversatz-, Perioden- und Anzahlsignalisierung anzeigt.

9. Vorrichtung nach einem der Ansprüche 1-2, ferner umfassend eine Sendeempfängerschaltung, die zu Folgendem konfiguriert ist: Übertragen der Anzeigen der SPS-SCI, um SPS-Übertragung an dem UE zu ermöglichen; und Übertragen der Mehrfachprozess-SPS für die Pakete unterschiedlicher Größe.

10. Vorrichtung nach Anspruch 9, ferner umfassend eine Antenne, die mit der Sendeempfängerschaltung gekoppelt ist.

11. Maschinenlesbares Medium, das Anweisungen zur Ausführung durch eine Verarbeitungsschaltung (806) eines evolved NodeB, eNB (104) speichert, um den eNB (104) zu veranlassen, Fahrzeug-zu-Fahrzeug-, V2V-, Kommunikation zu konfigurieren, wobei die Anweisungen die Verarbeitungsschaltung (806) zu Folgendem veranlassen:
Konfigurieren von Modus-2-Kanalressourcen für erfassungsbasierte kollisionsvermeidungsfähige Benutzergeräte, UEs, wobei die Modus-2-Kanalressourcen für die erfassungsbasierte Kollisionsvermeidung dediziert sind, und Konfigurieren zusätzlicher Kanalressourcen, um Rückwärtskompatibilität und Koexistenz mit zufälligen Übertragungen zu bewahren, wobei die konfigurierten Modus-2-Kanalressourcen und die zusätzlichen Kanalressourcen für V2V-Sidelink-Kommunikation sind, wobei die Modus-2-Kanalressourcen für semi-persistente Planung, SPS, innerhalb von Sidelink-Steuerinformations-, SCI-, Perioden konfiguriert sind; und
Codieren zur Übertragung unter Verwendung von Systeminformationsblock-, SIB, Signalisierung einer Anzeige der Modus-2-Kanalressourcen und der zusätzlichen Kanalressourcen, um SPS-Übertragung innerhalb von SCI-Perioden an einem Benutzergerät, UE (102), zu ermöglichen.

12. Maschinenlesbares Medium nach Anspruch 11, wobei die Anweisungen die Verarbeitungsschaltung veranlassen, die erfassungsbasierten Kollisionsvermeidungsparameter durch einen Modus-2a zu konfigurieren, und wobei eine Zufallsressourcenauswahlregel durch erfassungsbasierte Ressourcenauswahl ersetzt wird.

13. Maschinenlesbares Medium nach Anspruch 11, wobei die Anweisungen die Verarbeitungsschaltung veranlassen, die Anzeigen einer SPS-Periode unter Verwendung mehrerer Ressourcenpools mit verschobenen physischen Sidelink-Steuerkanal-, PSCCH-, Ressourcen zu konfigurieren.

14. Maschinenlesbares Medium nach Anspruch 11, wobei die Anweisungen die Verarbeitungsschaltung veranlassen, SPS durch Codieren einer SPS-SCI-Übertragung zu ermöglichen, die ein Feld trägt, das anzeigt, in wie vielen SCI-Perioden neue Anzeigen einer SPS-Periode bereitgestellt werden.

## Revendications

1. Un appareil d'un noeud B évolué, eNB (104), l'appareil comprenant :
une circuiterie de traitement (806) et une mémoire (808) ; la circuiterie de traitement (806) étant configurée pour :
configurer des ressources de canal Mode-2 pour détecter des équipements utilisateurs, UE, activés en évitement de collision basé sur une détection, les ressources de canal Mode-2 étant dédiées à un évitement de collision basé sur la détection, et configurer des ressources de canal additionnelles pour préserver une rétrocompatibilité et une coexistence avec des transmissions aléatoires, les ressources de canal Mode-2 configurées et les ressources de canal additionnelles étant destinées à une communication sidelink de véhicule à véhicule, V2V, les ressources de canal Mode-2 étant configurées pour une planification semi-persistante, SPS, à l'intérieur de période d'informations de contrôle sidelink, SCI ; et
coder pour transmission, en utilisant une signalisation de bloc d'informations système, SIB, une indication des ressources de canal Mode-2 et des ressources de canal additionnelles pour permettre une transmission SPS à l'intérieur de périodes SCI au niveau d'un équipement utilisateur, UE (102).

2. L'appareil de la revendication 1, dans lequel la circuiterie de traitement comprend un processeur de bande de base.

3. L'appareil de l'une des revendications 1 à 2, dans lequel la circuiterie de traitement est en outre configurée pour configurer une période SPS en utilisant des pools de ressources multiples avec des ressources de canal de contrôle sidelink physique, PSCCH, en décalage.

4. L'appareil de l'une des revendications 1 à 2, dans lequel la circuiterie de traitement est configurée pour permettre une SPS par codage d'une transmission SPS qui véhicule un champ indiquant dans combien de périodes SCI seront délivrés des nouveaux indices d'une période SPS.

5. L'appareil de l'une des revendications 1 à 2, dans lequel la circuiterie de traitement est configurée pour coder pour transmission des paquets de tailles différentes à l'intérieur d'une période SPS, avec support d'une signalisation de schémas de modulation et de codage, MCS, additionnels d'une allocation de bloc de ressource physique, PRB, additionnelle, transmettant des SCI additionnelles avec de nouveaux paramètres, ou exécutant des processus SPS multiples pour des tailles de paquets différentes.

6. L'appareil de l'une des revendications 1 à 2, dans lequel la circuiterie de traitement est en outre configurée pour configurer des paramètres d'évitement de collision basés sur une détection par une signalisation commune ou dédiée, incluant une ou plusieurs d'entre : période SPS, nombre de retransmissions, degré de randomisation, et seuil de détection.

7. L'appareil de l'une des revendications 1 à 2, dans lequel la circuiterie de traitement est configurée pour décoder des métriques rapportées par l'UE qui sont destinées à aider à l'évitement de collision basé sur une détection, les métriques décodées comprenant une ou plusieurs d'entre : une mappe des puissances reçues, un nombre de sources de signal uniques à proximité, et un profil de trafic.

8. L'appareil de l'une des revendications 1 à 2, dans lequel la circuiterie de traitement est en outre configurée pour configurer les mêmes ressources de contrôle de sous-trame et de transmission de données par une bitmap qui indique des blocs de ressources physiques, PRB, activés dans une bande passante ou par une signalisation de décalage de départ, de période, et de nombre.

9. L'appareil de l'une des revendications 1 à 2, comprenant en outre une circuiterie émettrice-réceptrice configurée pour transmettre les indices des SCI de SPS pour permettre une transmission SPS au niveau de l'UE ; et transmettre les SPS de processus multiples pour les paquets de tailles différentes.

10. L'appareil de la revendication 9, comprenant en outre une antenne couplée à la circuiterie émettrice-réceptrice.

11. Un support lisible par machine stockant des instructions destinées à être exécutées par une circuiterie de traitement (806) d'un noeud B évolué, eNB (104), pour faire en sorte que l'eNB (104) configure une communication de véhicule à véhicule, V2V, les instructions faisant en sorte que la circuiterie de traitement (806) :
configure des ressources de canal Mode-2 pour détecter des équipements utilisateurs, UE, activés en évitement de collision basé sur une détection, les ressources de canal Mode-2 étant dédiées à un évitement de collision basé sur la détection, et configure des ressources de canal additionnelles pour préserver une rétrocompatibilité et une coexistence avec des transmissions aléatoires, les ressources de canal Mode-2 configurées et les ressources de canal additionnelles étant destinées à une communication sidelink de véhicule à véhicule, V2V, les ressources de canal Mode-2 étant configurées pour une planification semi-persistante, SPS, à l'intérieur de période d'informations de contrôle sidelink, SCI ; et
code pour transmission, en utilisant une signalisation de bloc d'informations système, SIB, une indication des ressources de canal Mode-2 et des ressources de canal additionnelles pour permettre une transmission SPS à l'intérieur de périodes SCI au niveau d'un équipement utilisateur, UE (102).

12. Le support lisible par machine de la revendication 11, dans lequel les instructions font en sorte que la circuiterie de traitement configure par un Mode-2a les paramètres d'évitement de collision basés sur une détection, et dans lequel une règle de sélection aléatoire de ressource est remplacée par une sélection de ressource basée sur une détection.

13. Le support lisible par machine de la revendication 11, dans lequel les instructions font en sorte que la circuiterie de traitement configure les indices d'une période SPS en utilisant des pools de ressources multiples avec des ressources de canal de contrôle sidelink physique, PSCCH, en décalage.

14. Le support lisible par machine de la revendication 11, dans lequel les instructions font en sorte que la circuiterie de traitement active la SPS par codage d'une transmission de SCI de SPS qui véhicule un champ indiquant dans combien de périodes SCI de nouveaux indices d'une période SPS seront délivrés.
